# EUROPEAN PATENT APPLICATION

(11) **EP 1 246 467 A1**
(43) Date of publication of application: **02.10.2002**
(21) Application number: 01400754.6
(22) Date of filing: 23.03.2001
(51) Int. Cl.: H04N 7/173

(54) **Method for establishing a connection between an interactive network adapter and a network interface unit as well as network interface unit and interactive network adapter**

(71) Applicant: THOMSON multimedia S.A., 92648 Boulogne Cedex (FR)
(72) Inventor: Berguiere, Guillaume, 35135 Chantepie (FR); Adam, Franck, 35000 Rennes (FR)
(74) Representative: Schäferjohann, Volker Willi, Dipl.-Phys.

(57) **Abstract**

The invention deals with the establishment and modification of connections between network interface units (11) such as a cable modem and a head-end (12) at the cable operator's side. There is already specified a return channel in the DVB standard. In this specification there is a process specified named sign-on procedure, which is always performed after an upstream frequency/channel change. During this sign-on procedure on the terminal side the synchronisation in time and the power level adjustment are the main tasks to be performed. This individual adjustment can be quite long, depending on the configuration of the network and on the terminal location in the cable access network.

According to the invention modified connection establishment procedures and connection changing procedures are defined. For this purpose, the head-end device transmits some parameter change values to the terminals during connection establishment. Those parameter change values are, for example, power level adjustment values and time offset adjustment values. Furthermore modified connect establishment messages, re-provision messages and transmission control messages are specified which are used to simplify the connection establishment and connection change processes. With this proposal it is possible that the timing adjustment need not be performed in a relative big ranging area and also the power level adjustment can be accelerated subjectively.

## Description

The invention relates to a method for establishing/modifying a connection between an interactive network adapter and a network interface unit. The invention is also related to an interactive network adapter itself, which can be used in the method as well as a network interface unit.

### Background

The present invention relates to subscriber networks, such as broadband cable television networks, and more particularly to improvements relating to establishing/modifying a connection between a subscriber station/terminal/set-top box, often called network interface unit and a central station of the network, which is often called a head-end or interactive network adapter. The invention is particularly suitable for use with networks with subscriber terminals/set-top boxes that use two-way modems, such as cable modems, that are connected to the network. Such modems are increasingly being used to allow network users to send and receive data, e.g. for Internet access, at relatively high speed. The modems may also provide telephone/telefax capabilities as well as television programme related interactivity data. The invention is also used generally for terminals that have an upstream signalling capability via the network e.g. to a network head end. When talking about upstream data transmissions, it is meant that data packets are sent from the subscriber station (cable modem, set-top box equipped with a cable modem, or the like) to the central station/head-end at the cable operator side. Respectively the downstream data transmission direction is the opposite i.e. data packets are transmitted from the central station at the cable operator side to the subscriber stations.

With the term cable modem, a modem is referred to that operates over the ordinary cable TV network cables. Basically, the cable modem is just connected to the TV outlet for the cable TV and the cable TV operator connects a cable modem termination system at the head-end (the cable company main office).

The term cable modem termination system describes the vital component that cable operators must install at the head-end. A CMTS instructs a cable modem when to transmit signals upstream and which channels to use. A CMTS demodulates upstream signals, translates them back into IP packets and redirects them to a sample switch. The sample switch redirects the IP packets to an IP router for transmission across the Internet. In the opposite direction it modulates downstream signals for transmission across the Hybrid Fibre Coax (HFC) cables to the subscribers homes. One CMTS will normally provide support for up to thousand simultaneous cable modem subscribers across a single 6 MHz channel. If more cable modems are required, adding more channels to the CMTS increases the number of channels.

To further explain the often-used terms upstream and downstream signals the following explanation is given. Downstream signals from the head-end are broadcast to all cable modem subscribers on the same network. Each cable modem filters the signals it needs from the stream of signals. In the upstream direction every cable modem is trying to place a different signal onto the network that will eventually share the same piece of transmission spectrum. Therefore, any form of access method is required to regulate which signal is actually carried. Access methods come in different varieties, such as Time or Frequency Division Multiple Access (TDMA or FDMA), Asynchronous Transfer Mode (ATM), Carrier Sense Multiple Access/Collision Detection (CSMA/CD) etc. which method is appropriate depends on the expected application (TV, Internet, phone).

There are protocol layers that ensure the upstream and downstream transmission of signals across the same piece of transmission spectrum, of course, in an orderly and fair way. For this purpose a media access control layer (MAC) and logical link control layer (LLC) are provided. Both the CMTS and the cable modem implement these protocol layers for several reasons, which include:
1. To ensure that upstream signals from all cable modems are received.
2. To assign frequencies to cable modems so they know where to transmit signals.
3. To assign time slots to the cable modems so that they know when to transmit signals to the head-end.

Standards have already been developed for this type of data communication. They include the multimedia cable network systems (MCNS), data over cable system interface specification (DOCSIS) and the DVB interaction channel for cable TV distribution systems (CATV).

The present invention is closely related to the last mentioned part of the digital video broadcasting standard (DVB). Its full bibliographic reference is ETSI ES 200 800 V1.2.1 (2000/04) digital video broadcasting (DVB): DVB interaction channel for cable TV distribution systems (CATV) from the European Telecommunications Standards Institute 2000 in F-06921 Sophia Antipolis Cedex, France. This specification will also be referenced in a corresponding ITU standard and DVB document.

One particular issue of the cable return channel system is to manage the frequencies being used for communication between the terminal and the head-end. This leads to adjust (on the terminal side) the synchronisation in time and the power level used to reach the head-end. This individual adjustment can be quite long; it depends on the configuration of the network and on the terminal location in the cable access network. According to the current version of the ETSI ES 200 800 standard, the adjustment procedure is done for each terminal each time it enters this network or each time the upstream frequency is changed.

### Invention

In view of the above it is the idea of the invention to ease up the procedure for establishing a new connection and/or changing an existing connection.

The object is solved with a method according to claim 1 and also with a network interface unit and an interactive network adapter as claimed. Favourable further developments and improvements are specified in the dependent claims.

The introduction of information specifying a transmission parameter change, in a connection establishment message or a re-provision message or a transmission control message allows for a subjectively acceleration of the sign-on procedure. The response message to these messages, which is sent upstream from terminal to the head-end can be much more precise in regards to the parameter settings. The improvement can go so far, that in the connect establishment message, re-provision message or transmission control message an information can be entered that specifies whether or not a sign on procedure is required after the frequency/channel change. So with this additional measure it is possible to renounce completely on the sign on procedure. The parameter adaptation can be done in a process called re-ranging, which is less expenditure. The transmission parameter change can be a transmit power level change or a set value for the attenuation level at the receiver input of the head-end or directly a specified power level/power level change value.

The different upstream frequencies or channels can have different characteristics, for example, regarding the noise behaviour so that for some channels/frequencies a high attenuation level needs to be set up at the head-end input, so as to ensure a correct carrier to noise ratio at the head-end receiver. Of course, the terminal must then transmit with a high power level. When changing the upstream frequency/channel, the power adjustment is known from the network testing/configuration phase. In such a case the head-end can control the power adjustment for the subscriber station avoiding the terminal to enter the basic sign-on procedure without any knowledge on the correction value. Consequently, the head-end is able to decide whether or not a sign on procedure is required. This can also be managed for the adjustment in time, which can be required if different upstream paths exist for different frequencies.

Moreover, when an upstream frequency is very noisy, the required attenuation can be so high that some far terminals cannot be received at the head-end. In this case, the head-end could be adapted to measure the position of the terminal before assigning a certain frequency/channel to it in order to be able to only route near terminals to these frequencies/channels.

### Drawings

The present invention will be explained in more detail in connection with the enclosed drawings. In the drawings:
- Fig. 1: shows the connection of subscriber stations to a head-end at the cable operator side over a conventional broadband television cable;
- Fig. 2: shows the preferred frequency ranges for a CATV interactive system according to the DVB specification;
- Fig. 3: shows a typical connection establishment process as specified in ETSI ES 200 800 standard;
- Fig. 4: shows a typical connection change process by means of a transmission control message as specified in ETSI ES 200 800 standard;
- Fig. 5: shows a second example of a connection change process by means of a transmission control message including transmission stop information;
- Fig. 6: shows a first example of a connection establishment process according to the invention;
- Fig. 7: shows a second example of a connection establishment process according to the invention;
- Fig. 8: shows a first example of a connection change process according to the invention and;
- Fig. 9: shows a second example of a connection change process according to the invention.

### Detailed Description of the Invention

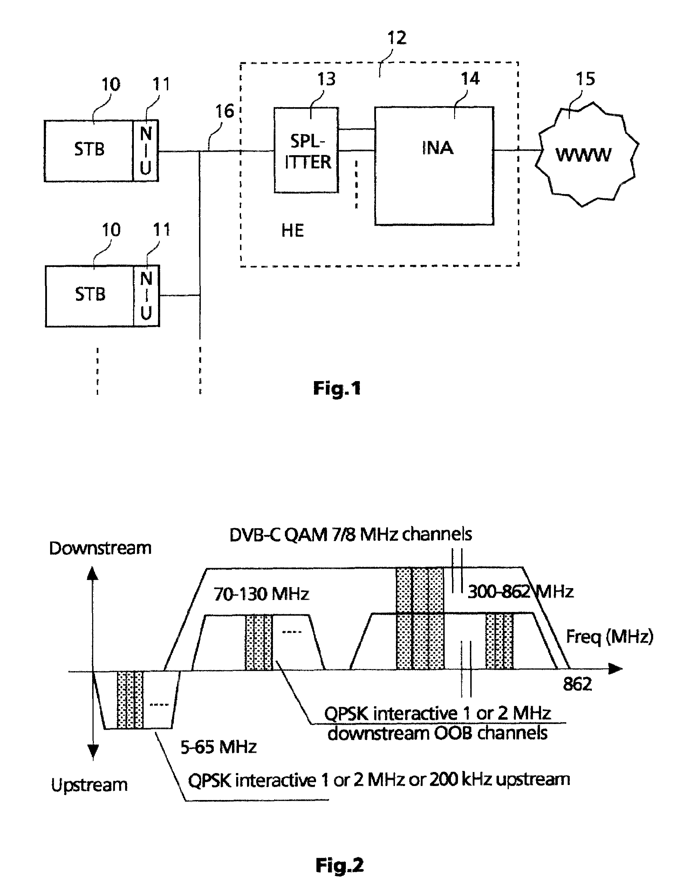

In Fig. 1 it is depicted that the number of subscriber stations are connected to a head-end via a broadband cable. The subscriber stations are set-top boxes for TV signal reception in the shown examples. Each subscriber station is equipped with a network interface unit 11. This network interface unit can be an internal or external cable modem. On the cable operators side the broadband cable 16 is terminated at the head-end. There is a signal splitter 13 in the head-end, which consists of a filter bank, which provides filters for the various downstream and upstream channels. The main component in the head-end is the interactive network adapter 14, on which the signals for the downstream transmissions are generated, separated for each downstream channel and the signals received in the upstream channels are evaluated. For Internet access, the interactive network adapter 14 is connected to the world-wide-web 15.

Fig. 2 indicates a possible spectrum allocation. This figure is part of the above-mentioned DVB specification ETSI ES 200 800. It is evident from Fig. 2 that there co-exists 30 to 300 upstream channels and up to 620 downstream channels on this cable. Evidently a high efficient implementation of the media access control layer is required to manage all the different channels. A multiple access scheme is defined in order to have different users share the same transmission media. Downstream information is broadcast to all users of the networks. Thus an address management system exists, which allows the interactive network adapter to send information single-cast to one particular user. Upstream information may come from any user in the network and shall, therefore, also be differentiated at the interactive network adapter, using the set of addresses. The manufacturer gets enough address space for addresses from an administration board. In each produced NIU (e.g. Set Top Box or Cable Modem) he programmes a unique address from this address space. This address is fixed throughout the whole "life" of the NIU and will be used for the communication between NIU and INA. For example a 6 bytes long address can be used which is equivalent to the Ethernet MAC addresses.

Within upstream channels, users send packets with TDMA-type access. This means that each channel is shared by many different users, who can either send packets with the possibility of collisions when this is allowed by the interactive network adapter or request transmission and use packets assigned by the interactive network adapter to each user specifically. Assuming that each channel can, therefore, accommodate thousands of users at the same time, all users present on the network at the same time can easily use the upstream bandwidth. The TDMA technique utilises a slotting methodology, which allows the transmit start times to be synchronised to a common clock source. Synchronising the start time increases message throughput of this signalling channel and the message packets to not overlap during transmission. The period between sequential start times are identified as slots. Each slot is a point in time when a message packet can be transmitted over the signalling link.

The time reference for slot location is received via the downstream channels generated at the delivery system and received simultaneously by all set-top units. However, since there is a propagation delay in any transmission network, a time base ranging method accommodates deviation of transmission due to propagation delay.

The physical layer for the forward interaction path (downstream transmissions) and for the return interaction path (upstream transmissions) is fully disclosed in above mentioned DVB specification and need not be described in detail here. Also the framing for forward interaction pass and return interaction pass is described in detail there as well as the slot timing assignment. More important for the understanding of the invention is the MAC functionality. A lot of messages flow between the interactive network adapter and the network interface unit for media access control. There are three categories in which the messages can be divided: initialisation, provisioning and sign-on management; connection management and link management. There is a procedure, which is performed during power on or reset called MAC initialisation and provisioning. This process is, of course, fully described in the DVB specification as cited. Upon an NIU becoming active (i.e. powered up), it shall first find the current provisioning frequency, which is a downstream frequency. For this purpose the NIU tunes on any of the down stream channels and waits for the provisioning channel message. This message shall be sent periodically on all downstream channels. Upon receiving this message, the NIU shall tune to the provisioning channel.

After a valid lock indication on a provisioning channel, the NIU awaits the default configuration message. When received, it shall configure its parameters as defined in the default configuration message. The default configuration parameters include default timer values, default power levels, default-retry counts as well as other information related to the operation of the MAC protocol. The NIU shall tune to the downstream provisioning channel and the upstream service channel after having received the default configuration message. On these two channels the sign-on and calibration process is performed. The NUI awaits the 'sign-on request message' from the INA entity. Upon receiving the 'sign-on request message', the NIU shall respond with 'a sign-on response message' and the sign-on response message shall be transmitted on a so-called ranging slot. The INA, upon receiving the 'sign-on response message' shall validate the NIU, by either sending an 'initialisation complete message' or a 'ranging and power calibration message'. When a 'ranging and power calibration message' is received, the NIU shall respond to the 'ranging and power calibration message' with a 'ranging and power calibration response message'. The 'ranging and power calibration response message' shall be transmitted on a ranging slot with a power level that has been corrected by a power control setting received in the 'ranging and power calibration message'. It is somehow a trial and error process for adjusting the power level during the ranging and power calibration process. There could be several attempts for adjusting the power level in the sign-on process. After having found acceptable signal strength and a good carrier to noise ratio in the 'ranging and power calibration response message', the head-end will issue an 'initialisation complete message'.

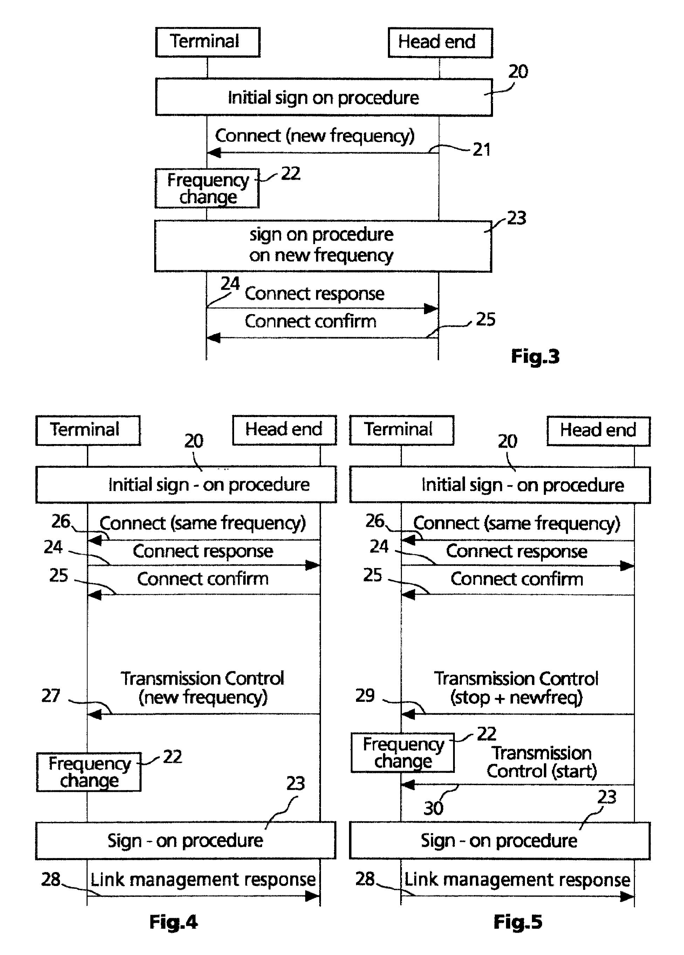

After the finished MAC initialisation and provisioning process, a connection establishment can be commenced. This process is described with the help of Fig. 3. In Fig. 3 on the left hand side the actions of the terminal are indicated, whereas on the right hand side the actions of the head-end are listed. After power on, the initial sign-on procedure is performed in step 20. This corresponds to the MAC initialisation and provisioning process as described above. Thereafter, the head-end generates a 'connect establishment message' which in the ETSI ES 200 800 specification is simply named 'connect message' and sends it downstream to the terminal in step 21. The 'connect establishment message' has a certain structure, which will be explained in more detail later on. For the time being it is sufficient to say that in the 'connect establishment message' the information about an assigned upstream frequency for the connection to be established is embedded. The terminal having received this connect establishment message on the provisioning channel, makes a frequency change in step 22. A complete sign-on procedure follows this frequency change in step 23. The sign-on procedure is similar to that in the initial sign-on procedure 20. However, the power level will be kept as previously adjusted in the initial sign-on procedure and also the time offset value remains unchanged. Of course, it can be that the power level found during sign-on on the upstream service channel is no longer optimal for the new frequency. Thus, again a number of messages could be required during this sign-on procedure on the new frequency in order to find the optimal parameter.

After having received the 'initialisation complete message' the terminal transmits a 'connect response message' to the head-end in step 24. This is to acknowledge the receipt of the connect establishment message . The head-end responds with a 'connect confirm message' downstream in step 25.

Fig. 4 shows a first example for changing an established connection in conformity with the ETSI ES 200 800 standard. Identical reference numbers denote the same steps as in Fig. 3. After the initial sign-on procedure in step 20, a 'connect establishment message' is sent from the head-end to the terminal in step 26, which specifies that a connection shall be established on a downstream and upstream frequency of the initial sign-on procedure. In this case no additional sign-on procedure is required and the terminal replies in step 24 with a 'connect response message'. It is signalled in the 'sign-on establishment message' with a Sign-On bit that no sign-on process shall be started in this case. The 'connect confirm message' follows directly from the head-end in step 25. In step 27 a so-called 'transmission control message' is transmitted from the head-end to the terminal. Also the transmission control message structure will be explained in more detail later on. For the moment it is sufficient to explain that with a 'transmission control message' several aspects of the upstream transmission can be controlled. This includes stopping upstream transmission re-enabling transmission from NIU or group of NIUs and rapidly changing the upstream frequency being used by an NIU or group of NIU.

In the example it is presumed that the 'transmission control message' makes a frequency change for the upstream channel. The terminal performs the frequency change in step 22. A new sign-on procedure follows in step 23. This sign-on procedure is the same sign-on procedure as in the example of Fig. 3. A 'link management response message' is sent from the terminal to the head-end in step 28 to indicate reception and presetting of the previously sent 'transmission control message'.

Another example of a change of an established connection with the help of a 'transmission control message' is shown in Fig. 5. The difference to the example in Fig. 4 is, that the 'transmission control message' also includes an upstream transmission stop command in addition to the new upstream frequency information. This prevents the terminal and head-end from directly starting the sign-on procedure after the frequency change in step 22. The terminal first has to await the 'transmission control message' having included the upstream transmission start command in step 30. After having received this message, the sign-on procedure will be performed and after it's finishing the 'link management response message' will be delivered in step 28 from the terminal to the head-end.

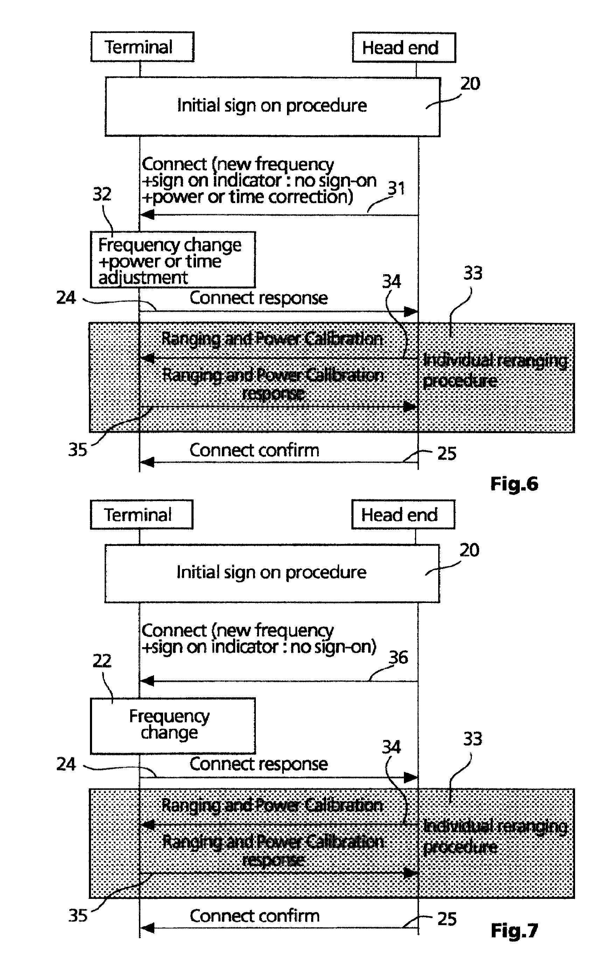

In Fig. 6 a first example of a connection establishment process is illustrated, which is improved according to the invention. Reference number 20 denotes the initial sign-on procedure like in Figures 3 to 5. Following the initial sign-on procedure a 'connect establishment message' is transmitted from the head-end to the terminal in step 31. This 'connect establishment message' has, however, a modified format. Basically, the new 'connect establishment message' has included a sign-on indicator and a power level or time correction value in addition. The format of this 'connect establishment message' is shown in table 1. Most of the fields in this table are already known from the ETSI ES 200 800 standard. Specifically, it is referred to page 73, where the structure and format of the original connect establishment message is depicted.

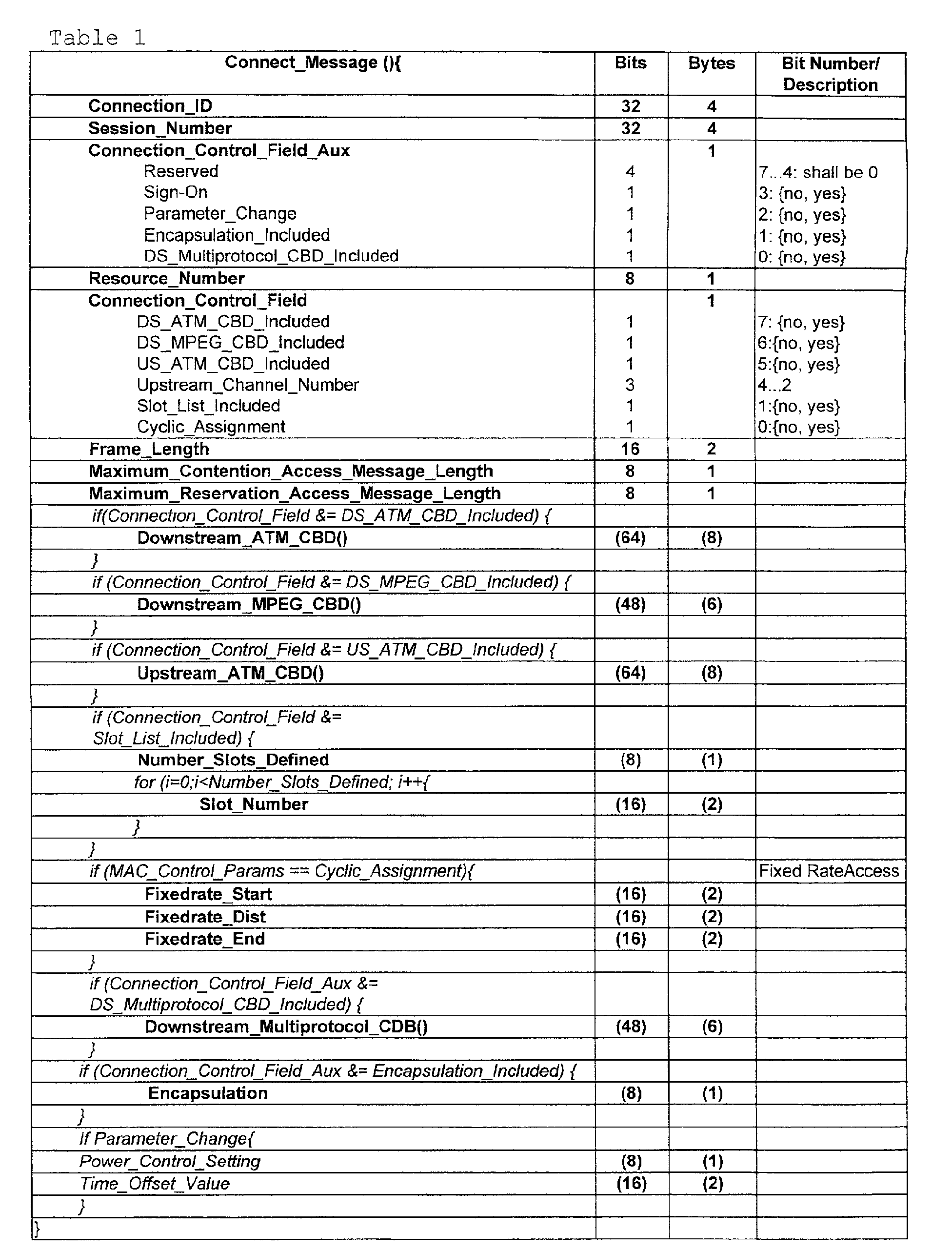

The known fields of this message are, therefore, not expressively explained here. A few fields are added to implement the idea of the invention. In the Connection_Control_Field_Aux there is additionally the data entry Sign-On, which only requires one single bit in addition. With this bit the sign-on process can be switched on and off. Furthermore, there is the additional data entry Parameter_Change, which also requires only one single bit in addition. This bit is used to indicate that the connection establishment is accompanied by a parameter change or not. Two of the reserved bits in the Connection Control Field Aux are used for the two additional bits in this field. Only 4 reserved bits remain after this.

Further in addition, it has been added the conditional field if (Parameter Change Yes) then Power-Control-Setting and further optional Time-Offset-Value at the end of the table. The optional additional parameters Power-Control-Setting is an 8-bit signed integer for indicating how the power level value needs to be corrected compared to the previous setting. With 8 bits, it is possible to make a correction of the power level in the range of -128 to +127 adjustment steps. It is specified in the ETSI ES 200 800 standard that the transmit power level for upstream transmissions shall be in the range 85 to 113 dBµV for the case of 75 Ohm cables. For some geographic areas it is also allowed to use the range 85 to 122 dBµV. Also it is specified that the power level range shall be adjustable by steps of 0,5 dBµV. The Power-Control-Setting parameter having 8 bits is, therefore, more than sufficient for this purpose.

The Time-Offset value has a length of 16 bits and is used for correcting the transmitting time point in order to compensate for the different distances of the terminals from the head-end. This parameter is also part of the ranging and power calibration method, which is already specified in the ETSI ES 200 800 standard. The Time-Offset value is a 16 bit short integer representing a relative offset of the upstream transmission timing. A negative value indicates an adjustment forward in time (later). A positive value indicates an adjustment back in time (earlier). The unit of measure is 100 ns.

After evaluating the 'connect establishment message' the terminal makes a frequency change inclusive a power and/or time adjustment based on the entries in the connect establishment message. This is done in step 32. Following the frequency change and power and/or time adjustment step, the terminal sends back the 'connect response message' in step 24. This is a difference to the procedure of Fig. 3, where another sign-on procedure on the new frequency is first performed in step 23 after the frequency change 22. Following the 'connect response message' an individual re-ranging procedure will be performed in step 33. This individual re-ranging procedure does not take as much time as the full sign-on procedure. The re-ranging procedure is similar to the re-calibration procedure, which is already specified in ETSI ES 200 800. A ranging and power calibration message will be transmitted from head-end to terminal in step 34 and the corresponding ranging and power calibration response message will be returned to the head-end by the terminal in step 35. Both messages have already been explained in connection with Fig. 3 because they are also used in the initial sign-on procedure as well as in the sign-on procedures after a frequency change. The 'connect confirm message' is transmitted from the head-end to the terminal in step 25 after finishing the individual re-ranging procedure. The connection establishment as shown in Fig. 6 is subjectively accelerated compared to the connection establishment shown in Fig. 3.

Fig. 7 shows an example of a connection establishment according to the invention, where in the 'connect establishment message' the sign-on indicator is set to no sign-on and a new frequency is also announced. In this example the frequency change in step 22 is equal to the frequency change in Fig. 3. There is no direct adjustment of the power level and/or the time offset value. However, also in this case, the 'connect response message' will be delivered right after the frequency change procedure. And also the individual re-ranging procedure will be performed following the 'connect response message' in step 33. A 'connect confirm message' in step 25 terminates the connection establishment process.

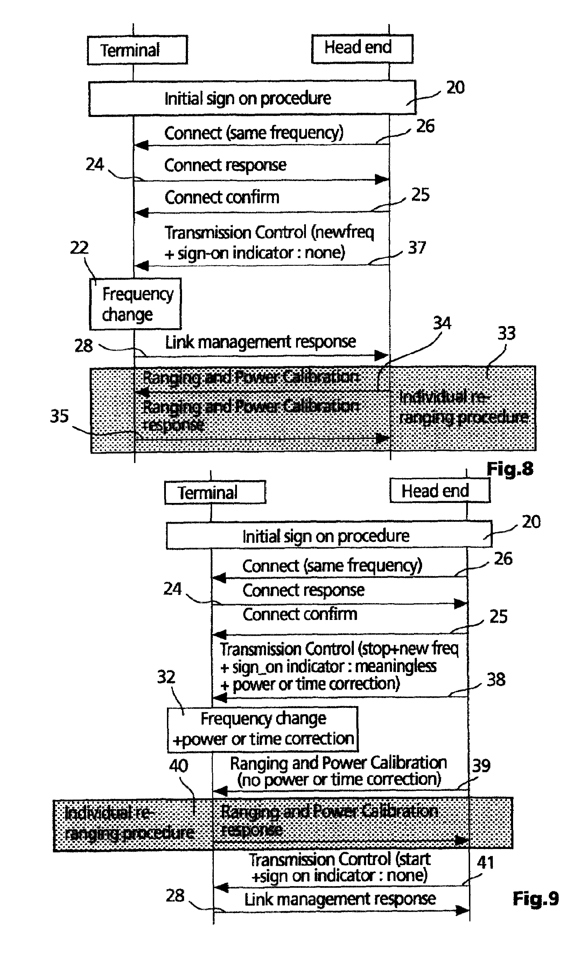

Fig. 8 shows an example for changing an established connection by means of a 'transmission control message' according to the invention. This process is compared to the process shown in Fig. 4. The initial sign-on procedure in step 20 and the 'connect establishment message' in step 26 'connect response message' in step 24 and 'connect confirm message' in step 25 are identical to those shown in Fig. 4. Following this connection establishment a modified 'transmission control message' is transmitted from head-end to a terminal in step 37. In this 'transmission control message' besides a new frequency the parameter is included that no sign-on procedure shall follow this 'transmission control message'. For this purpose the format and structure of the 'transmission control message' specified in ETSI ES 200 800 standard needs to be modified. The new format and structure is shown in table 2.

In the Transmission_Control_Field the additional parameter Sign-On is included, together with 7 reserved bits. The 'transmission control message' format also has been modified like the 'connect establishment message' in regard to the conditional if (Parameter Change) clause. This field also carries both additional parameters power_control_setting and time_offset_value as already explained in connection with the connect establishment message structure shown in table 1.

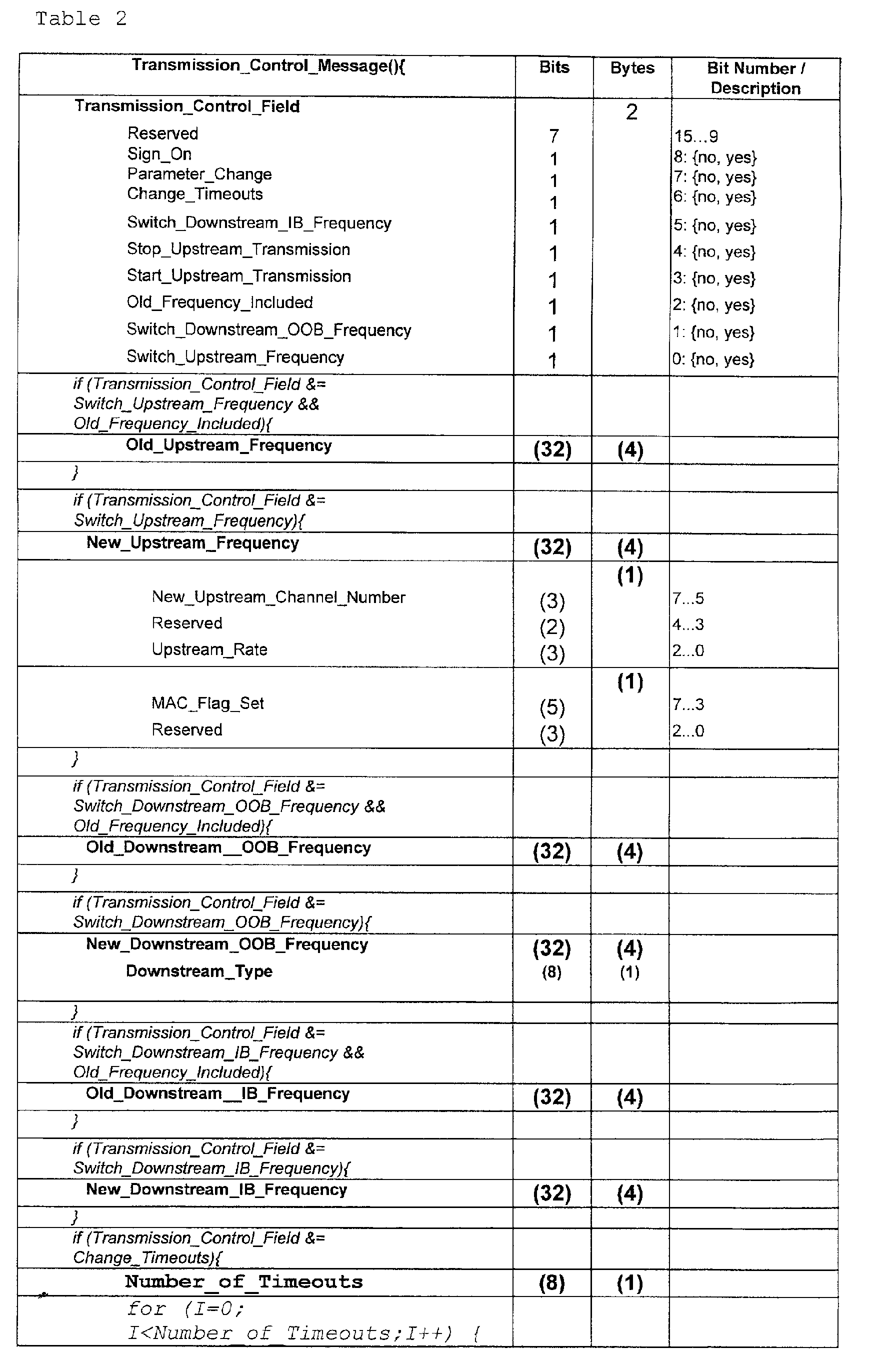

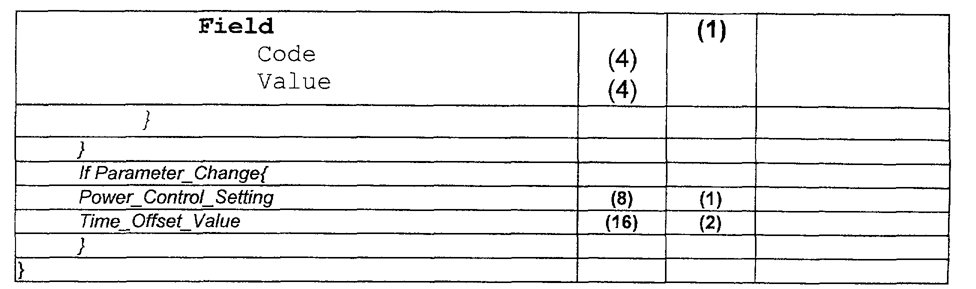

After having received the 'transmission control message' in step 37 the conventional frequency change procedure will be performed at the terminal side in step 22. Instead of the sign-on procedure directly following this frequency change in this embodiment the link management response message will be delivered to the head-end in step 28. But now the individual re-ranging procedure will be performed like in Fig. 6 and 7 in this example. It is not mandatory to make the individual re-ranging procedure. Often, the settings for power level calibration and synchronisation can remain unchanged after the frequency and channel change. After this no further message is required and data transmission can follow on the new frequency.

A second example according to the invention for changing an established connection with a 'transmission control message' is illustrated in Fig. 9. In this case, in step 38 the 'transmission control message' not only announces a frequency change but also a transmission stop command and a power and/or time correction. The entry of the sign-on indicator field is meaningless in this case. This is because the transmission is stopped anyhow. The terminal will make the frequency change in step 32 inclusive the power and/or time correction. The individual re-ranging procedure will also be performed. Of course, in this case the 'ranging and power calibration message' does not contain a further power and/or time correction because this information was already delivered in the 'transmission control message'. The terminal will just respond with the 'ranging and power calibration response message' in step 35. After this, the terminal waits for a further 'transmission control message' announcing that the transmission is started again. The head-end delivers this 'transmission control message' in step 41 and sets the sign-on indicator bit so that it is indicated that no sign-on procedure needs to be performed after this message. The terminal responds with a 'link management response message' in step 28.

In ETSI ES 200 800 standard there is a further message type, which can be used for changing an established connection. This message is called re-provision message. A new upstream frequency can also be announced with the help of the 're-provision message'. The 're-provision message' is sent by the head-end to the terminal to reassign upstream resources (maintaining the originally requested quality of service parameters at the establishment of the connection). It is, therefore, a further embodiment of the invention that the 're-provision message' is modified similar to the modified 'connect establishment message' and 'transmission control message'. The modified re-provision message structure/format is shown in table 3. The table shows that the same amendments have been made. In the Re-provision_Control_Field the sign-on indicator bit and the parameter change indicator bit has been added. The conditional if (parameter change) clause is also added at the end. For explaining the changing of an established connection with a 're-provision message", the drawings for Fig. 8 and 9 can be used if the 'transmission control messages' are replaced by 're-provision messages'.

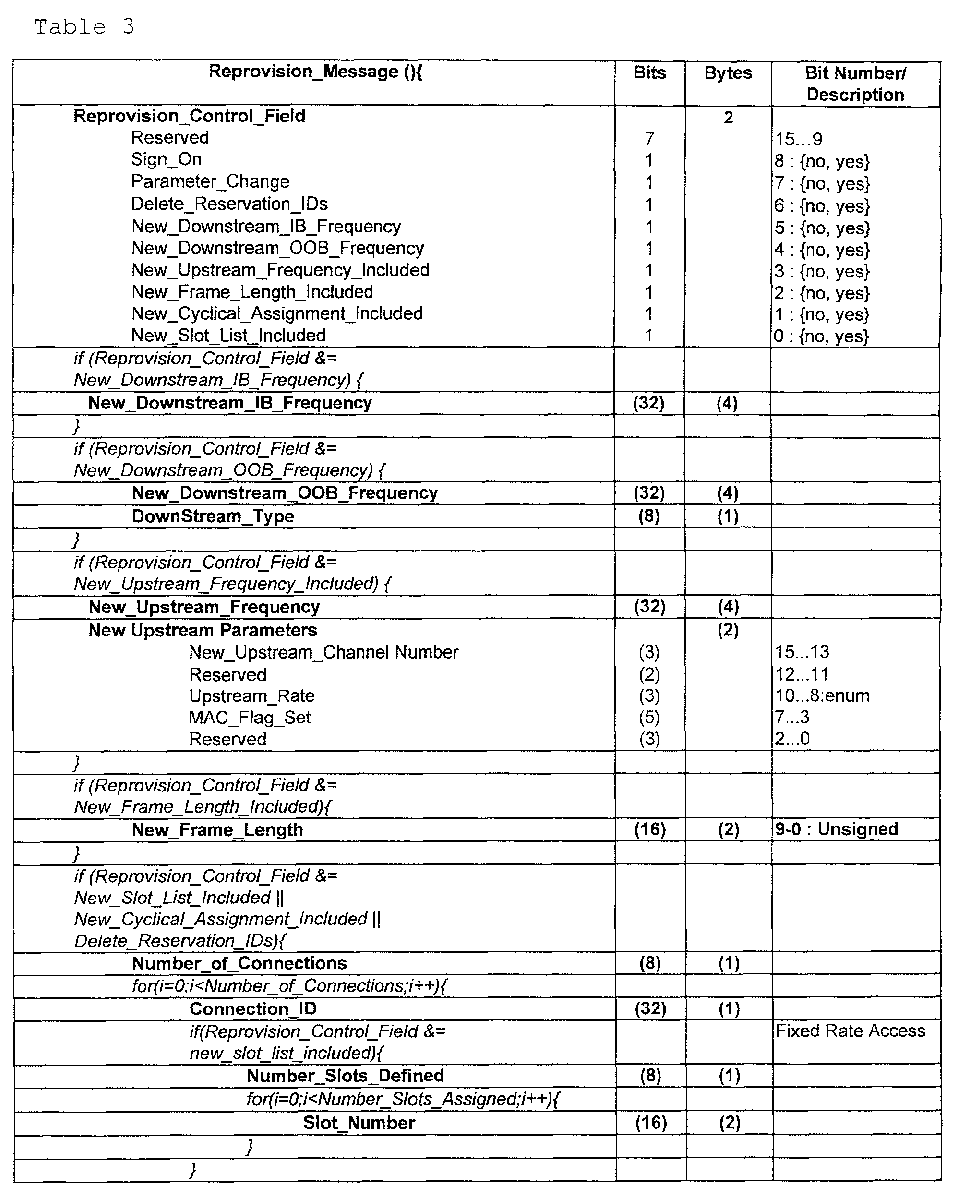

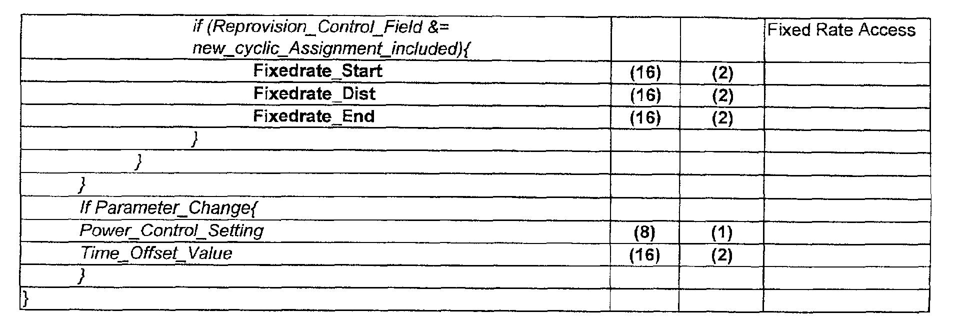

The described improved connection establishment/change process allows for a further improvement of the frequency/channel assignment process. The INA can measure the distance to a terminal for which a connection is to be established before establishing/changing a connection. This is done within the initial sign-on process. An example of how this can be done is e.g. described in WO-A 00/44174. Then the INA determines which frequency/channel can be used by this terminal so that it will be correctly received. For this, the INA has to know for each upstream frequency what is the input attenuation and thus determine what is the maximum distance for a terminal to be received at the INA using a power level inferior or equal to the maximum allowed power level.

The INA consults the entries in a table in order to find the frequencies/channels, which have proved to deliver sufficient carrier to noise ratios for the measured distance. A frequency/channel assignment will be made only with one of the frequencies/channels selected in the previous step. The table can be set up e.g. during the network testing/configuration phase.

The invention is not restricted to the exemplary embodiment disclosed in the description. If in a standard different types of messages can be used for establishing and changing a connection, those messages can also be modified in the sense of the invention. The disclosed modifications of the different messages, of course, also change the behaviours of the equipment in the head-end and the network interface unit in the terminals. The skilled man will agree that those modifications are directly deducible from the modified message structures with the help of the terminal head-end communication illustrations in Fig.3 to 9.

An example where the sign-on indicator is set to Sign-on: yes is not explicitly shown in the drawings. For these examples the Figs. 3 to 5 can be used for illustrating these embodiments. It is important to notify that the sign-on procedures are speeded up by the use of the parameters Power_Control_Setting and Time_Offset_Value as explained above.

## Claims

1. Method for establishing a connection between an interactive network adapter (14) and a network interface unit (11), wherein the transmission medium between interactive network adapter (14) and network interface unit (11) is a broadband cable (16), providing a number of downstream channels and a number of upstream channels, wherein for connection establishment the interactive network adapter (14) first sends a connect establishment message (31, 36) to the network interface unit (11) having included the information on which frequency/channel the connection shall be established, **characterised in that** the connect establishment message (31, 36) includes a further information specifying a transmission parameter change, for upstream transmissions on the new frequency/channel specified in this message .

2. Method according to claim 1, wherein a re-provision message is sent from interactive network adapter (14) to network interface unit (11) in order to change previously established connection parameters, wherein in case the re-provision message introduces a frequency/channel change for the connection, the re-provision message includes an information specifying a transmission parameter change, for upstream transmissions on the new frequency/channel specified in this message .

3. Method according to claim 1 or 2, wherein a transmission control message (37, 38) is sent from interactive network adapter (14) to network interface unit (11) in order to control several aspects of connections, such as stopping upstream transmissions, re-enabling upstream transmissions, rapidly changing upstream frequency/channel, wherein in case the transmission control message introduces a frequency/channel change for the connection, the transmission control message includes further information specifying a transmission parameter change for upstream transmissions on the new frequency/channel specified in this message.

4. Method according to one of claims 1 to 3, wherein the transmission parameter is the absolute or relative transmit power level or the absolute or relative set value for the attenuation level at the receiver input of the interactive network adapter (14), from which the transmit power level is deducible, or the time offset value which is used for correcting the transmission time point of the network interface unit in order to synchronise it with the transmission time point of another network interface unit, which has a different distance to the interactive network adapter (14).

5. Method according to one of the previous claims, wherein the connect establishment message, the re-provision message or the transmission control message further includes an information entry, which specifies whether or not a sign-on procedure is required after the frequency/channel change.

6. Method according to one of the previous claims, wherein the connect establishment message, the re-provision message or the transmission control message further includes an information entry, which specifies whether or not a parameter change is required after the frequency/channel change.

7. Network interface unit for use in a method according to one of the previous claims, having included a receiving section and a transmitting section, and having included a media access control management entity, wherein after receiving a connect establishment message a re-provision message or a transmission control message the network interface unit (11) tunes to the frequency/channel specified in the connect establishment message, re-provision message or transmission control message and receives a sign-on request message from the interactive network adapter (14), **characterised in that,** the network interface unit (11) transmits a response message to the interactive network adapter (14), wherein a transmission parameter is set to a value corresponding to a transmission parameter change value, which has been received in the connect establishment message, re-provision message or transmission control message.

8. Network interface unit according to claim 7, wherein the response message is a sign-on response message.

9. Network interface unit according to claim 7, wherein in the case that the connect establishment message, re-provision message or transmission control message includes an information entry, which specifies that no sign-on procedure is required after the frequency/channel change, the network interface unit (11) does not wait for a sign-on request message and transmits a connect response message or a link management response message to the interactive network adapter (14), wherein for the response message a transmission parameter is set to a value corresponding to a transmission parameter change value that has been received in the re-provision message or transmission control message.

10. Interactive network adapter for use in a method according to one of the claims 1 to 6, having included a receiving section and a transmitting section and having included a media access control management entity, wherein for establishing a connection the interactive network adapter (14) transmits a connect establishment message to a network interface unit (11), having included an information on which frequency/channel the connection shall be established, **characterised in that** the the interactive network adapter inserts an information specifying a transmission parameter change value in the connect establishment message, for upstream transmissions on the frequency/channel specified in this message.

11. Interactive network adapter according to claim 10, wherein for a change of previously established connection parameters a re-provision message is sent from interactive network adapter (14) to network interface unit (11), having included an information on which frequency/channel the connection shall be established, and wherein the interactive network adapter (14) inserts an information specifying a transmission parameter change value in the re-provision message, for upstream transmissions on the frequency/channel specified in this message.

12. Interactive network adapter according to claim 10 or 11, wherein for controlling several aspects of connections, such as stopping upstream transmissions, re-enabling upstream transmissions, rapidly changing upstream frequency/channel, a transmission control message is sent from interactive network adapter (14) to network interface unit (11), having included an information on which frequency/channel the connection shall be established, wherein the interactive network adapter (14) inserts an information specifying a transmission parameter change value in the transmission control message, for upstream transmissions on the frequency/channel specified in this message.

13. Interactive network adapter according to one of claims 10 to 12, wherein the interactive network adapter (14) inserts an information entry in the connect establishment message, re-provision message or transmission control message, which specifies that no sign-on procedure is required after the frequency/channel change.

14. Interactive network adapter according to one of claims 10 to 13, wherein the transmission parameter is the transmit power level or the set value for the attenuation level at the receiver input of the interactive network adapter (14), from which the transmit power level is deducible, or the time offset value which is used for correcting the transmission time point of the network interface unit in order to synchronise it with the transmission time point of another network interface unit, which has a different distance to the network interface unit.

15. Interactive network adapter according to one of claims 10 to 14, wherein it includes means for measuring the distance to a terminal and that it includes frequency/channel assigning means, which utilize the entries in a table for assigning to terminals having a distance higher than a predetermined limit those frequencies/channels which proved to deliver a carrier/noise ratio better than a predetermined further limit.
